# EUROPEAN PATENT APPLICATION

(11) **EP 2 448 045 A1**
(43) Date of publication of application: **02.05.2012**
(21) Application number: 10792207.2
(22) Date of filing: 25.06.2010
(51) Int. Cl.: H01M 4/58, H01M 4/36, C01B 25/45

(54) **PROCESS FOR PRODUCTION OF POSITIVE ELECTRODE MATERIAL FOR SECONDARY BATTERIES, AND POSITIVE ELECTRODE MATERIAL FOR SECONDARY BATTERIES**

(30) Priority: 26.06.2009 JP 2009152181
(71) Applicant: Asahi Glass Company, Limited, Tokyo 100-8405 (JP)
(72) Inventor: BEPPU, Yoshihisa, Tokyo 100-8405 (JP); YOSHIDA, Naoki, Tokyo 100-8405 (JP)
(74) Representative: Müller-Boré & Partner Patentanwälte
(86) International application number: PCT/JP2010/060894
(87) International publication number: WO 2010/150889

(57) **Abstract**

To provide a process for producing a positive electrode material for a secondary cell, whereby it is possible to easily produce a positive electrode material comprising an olivine-type phosphate composite compound and having electrical conductivity and its reliability improved.

A molten material comprising, based on oxides (unit: mol%), from 5 to 40% of A₂O (A is at least one member selected from the group consisting of Li and Na), from 40 to 70% of MO (M is at least one member selected from the group consisting of Fe, Mn, Co and Ni) and from 15 to 40% of P₂O₅ is cooled to obtain a solidified material. The solidified material and at least one member selected from the group consisting of an organic compound and a carbon powder is mixed and pulverized, followed by heating of the pulverized material to precipitate crystal containing olivine-type AMPO₄ as well as to bind at least one member selected from the group consisting of the organic compound, the carbon powder and a reaction product thereof to the surface of the crystal. The melting step and the heating step are carried out under an inert atmosphere or a reduced atmosphere.

## Description

### TECHNICAL FIELD

The present invention relates to a process for producing a positive electrode material for a secondary cell and a positive electrode material for a secondary cell.

### BACKGROUND ART

In recent years, lithium-ion secondary cells are broadly used as power supply for portable electronic devices such as mobile phones and notebook computers, electric power tools, etc. As a positive electrode material for lithium-ion secondary cells, layered rock-salt type LiCoO₂ is commonly used. However, there have been problems such that layered rock-salt type LiCoO₂ is insufficient in safety, and Co is a limited resource and thus is expensive and variation of the price is large. Further, toward the development and promotion of e.g. electric vehicles and hybrid cars, lithium-ion secondary cells have been required to have higher capacity and to be larger in size to a large extent while maintaining the safety.

On the other hand, from the viewpoint of resource amount, safety, cost, stability, and so on, an olivine-type phosphate compound (LiMPO₄ (wherein M is a transition metal element)) as represented by olivine-type lithium iron phosphate (LiFePO₄) has been spotlighted as a positive electrode material for a next-generation lithium-ion secondary cell (Patent Documents 1 and 2). However, there is a problem such that since an olivine-type phosphate compound (LiMPO₄) has a high electric resistance as compared with conventional materials, when it is used as a positive electrode material for a lithium-ion secondary cell, an insertion or deinsertion reaction of lithium is likely to be slow at the time of charge or discharge of the lithium-ion secondary cell, and as a result, the capacity of the secondary cell is likely to decrease as compared to the theoretical value.

In this regard, Patent Document 3 discloses a positive electrode material wherein conductive fine particles of e.g. silver, platinum, gold or carbon is supported on an olivine-type lithium iron phosphate powder. When silver, platinum, gold or the like is used as the conductive fine particles, such a material itself is expensive, and since it has a high specific gravity, it is not possible to avoid a high specific gravity of the positive electrode material. When carbon is used as the conductive particles, although it is possible to reduce the cost or attain a low specific gravity, when a carbon powder is added at the time of a solid phase reaction to form an olivine-type lithium iron phosphate as described in Patent Document 3, it is difficult to let the carbon powder be uniformly supported based on the volume change at the time of the solid phase reaction, and the ability of supporting the carbon powder is likely to be insufficient.

Patent Document 4 discloses a positive electrode material wherein a conductive path composed of carbon is incorporated in particles of an olivine-type lithium phosphate compound (LiMPO₄ (wherein M is Co, Ni, Mn or Fe)). According to the document, a starting material to be used for synthesizing an olivine-type lithium phosphate compound by firing and an organic substance are mixed, and the mixture is fired to synthesize an olivine-type lithium phosphate compound and at the same time, to incorporate a conductive path composed of carbon in the particles. By such a method, the conductive path may not be sufficiently formed by the reaction or the volume change at the time of firing.

Patent Document 5 discloses a process for producing a positive electrode material comprising subjecting an olivine-type lithium phosphate compound (LiMPO₄ (wherein M is Fe, Co, Mn or Ni)) and a water-soluble carbohydrate having a reducing property to heat treatment under an inert atmosphere to carbonize the water-soluble carbohydrate on the surface of the particles or among the particles of the lithium phosphate compound, thereby to form a conductive carbon layer. This process has a problem such that the production steps become cumbersome since it is necessary to preliminarily synthesize an olivine-type lithium phosphate compound (e.g. lithium iron phosphate), and then a water-soluble carbohydrate is carbonized to form a carbon layer on the surface of the particles or among the particles of the lithium phosphate compound.

### PRIOR ART DOCUMENTS

### PATENT DOCUMENTS

Patent Document 1: JP-A-09-134724
Patent Document 2: JP-A-09-134725
Patent Document 3: JP-A-2001-110414
Patent Document 4: JP-A-2003-203628
Patent Document 5: JP-A-2008-034306

### DISCLOSURE OF INVENTION

### TECHNICAL PROBLEM

The present invention is to provide a process for producing a positive electrode material for a secondary cell, whereby it is possible to easily produce a positive electrode material comprising an olivine-type phosphate compound and having electrical conductivity and its reliability improved, and a positive electrode material for a secondary cell.

### SOLUTION TO PROBLEM

The present invention provides the following [1] to [18].
[1] A process for producing a positive electrode material for a secondary cell, which comprises, in this order, a melting step of obtaining a molten material comprising, based on oxides (unit: mol%), from 5 to 40% of A₂O (wherein A is at least one member selected from the group consisting of Li and Na), from 40 to 70% of MO (wherein M is at least one member selected from the group consisting of Fe, Mn, Co and Ni) and from 15 to 40% of P₂O₅; a cooling step of cooling the molten material to obtain a solidified material; a pulverizing step of mixing and pulverizing the solidified material and at least one member selected from the group consisting of an organic compound and a carbon powder to obtain a pulverized material; and a heating step of heating the pulverized material to precipitate crystal containing olivine-type AMPO₄ as well as to bind at least one member selected from the group consisting of the organic compound, the carbon powder and a reaction product thereof to the surface of the crystal; provided that at least the melting step and the heating step are carried out under an inert atmosphere or a reduced atmosphere.
[2] The process for producing a positive electrode material for a secondary cell according to [1], wherein the cooling step is carried out under an inert atmosphere or a reduced atmosphere.
[3] The process for producing a positive electrode material for a secondary cell according to [1] or [2], wherein the cooling rate of the molten material in the cooling step is from 100 to 10¹⁰ °C/s.
[4] The process for producing a positive electrode material for a secondary cell according to any one of [1] to [3], wherein the pulverizing step is carried out in a dispersion medium.
[5] The process for producing a positive electrode material for a secondary cell according to any one of [1] to [4], wherein at least one member selected from the organic compound and the carbon powder to be mixed in the pulverizing step is mixed in an amount of from 0.1 to 20 mass% as the carbon content in the positive electrode material for a secondary cell.
[6] The process for producing a positive electrode material for a secondary cell according to any one of [1] to [5], wherein in the heating step, at least a part of the organic compound is carbonized.
[7] The process for producing a positive electrode material for a secondary cell according to any one of [1] to [6], wherein the crystal has a composition represented by the following formula (1):

   AₓM_{y}PO_{w} (1)

   wherein x and y satisfy 0<x≦1.5 and 0.8≦y≦1.2, and w is a number dependent on the valence of the element M and is a number represented by w=(x+yz+5)/2 (wherein z is the valence of the element M).
[8] The process for producing a positive electrode material for a secondary cell according to any one of [1] to [7], wherein the organic compound has a water solubility.
[9] The process for producing a positive electrode material for a secondary cell according to any one of [1] to [8], wherein the organic compound has a reducing property.
[10] The process for producing a positive electrode material for a secondary cell according to any one of [1] to [9], wherein a reducing agent is added in the melting step.
[11] The process for producing a positive electrode material for a secondary cell according to any one of [1] to [10], wherein the element A is Li.
[12] The process for producing a positive electrode material for a secondary cell according to any one of [1] to [11], wherein the element M is at least one member selected from the group consisting of Fe and Mn.
[13] The process for producing a positive electrode material for a secondary cell according to any one of [1] to [12], wherein the crystal has a composition represented by the following formula (2):

   LiₓM_{y}PO_{w} (2)

   wherein x and y satisfy 0.95≦x≦1.05 and 0.95≦y≦1.05, and w is a number dependent on the valence of the element M and is a number represented by w=(x+yz+5)/2 (wherein z is the valence of the element M).
[14] The process for producing a positive electrode material for a secondary cell according to any one of [1] to [13], wherein in the melting step, a starting mixture comprising a compound containing the element A, a compound containing the element M and a compound containing P is heated to obtain the molten material.
[15] The process for producing a positive electrode material for a secondary cell according to [14], wherein as the compound containing the element M in the melting step, an oxide of the element M is used (provided that a part or all of the at least one member may form a hydrated salt).
[16] The process for producing a positive electrode material for a secondary cell according to [14] or [15], wherein as the compound containing P in the melting step, at least one member selected from the group consisting of phosphorus oxide (P₂O₅), ammonium phosphate ((NH₄)₃PO₄), ammonium hydrogen phosphate ((NH₄)₂HPO₄, NH₄H₂PO₄), phosphoric acid (H₃PO₄), phosphorous acid (H₃PO₃), hypophosphorous acid (H₃PO₂) and a phosphate of the element M is used (provided that a part or all of the at least one member may form a hydrated salt).
[17] A positive electrode material for a secondary cell, which is produced by the process for producing a positive electrode material for a secondary cell as defined in any one of[1]to [16].
[18] A process for producing a secondary cell, wherein the positive electrode material for a secondary cell as defined in [17] is used.

The positive electrode material for a secondary cell of the present invention is **characterized in that** it is obtainable by the process for producing a positive electrode material for a secondary cell of the present invention.

### ADVANTAGEOUS EFFECTS OF INVENTION

According to the process for producing a positive electrode material for a secondary cell of the present invention, it is possible to homogeneously and strongly bind a conductive material based on an organic compound or a carbon powder to the surface of crystal particles containing olivine-type AMPO₄ obtained in the heating step. It is thereby possible to reproducibly and efficiently produce a positive electrode material comprising an olivine-type phosphate compound and having electrical conductivity and its reliability improved.

### BRIEF DESCRIPTION OF DRAWINGS

Fig. 1 is a cross-sectional view schematically illustrating an example of a construction of a positive electrode material obtained by the present invention.
Fig. 2 is a chart showing X-ray diffraction patterns of phosphate compound particles obtained in Examples 18 to 21 of the present invention.

### DESCRIPTION OF EMBODIMENTS

The present invention provides a process for producing a positive electrode material for a secondary cell composed of olivine-type phosphate compound particles (crystal particles containing olivine-type AMPO₄), which comprises, in this order, a melting step of obtaining a molten material comprising, based on oxides (unit: mol%), from 5 to 40% of A₂O, from 40 to 70% of MO and from 15 to 40% of P₂O₅; a cooling step of cooling the molten material to obtain a solidified material; a pulverizing step of mixing and pulverizing the solidified material and at least one member selected from the group consisting of an organic compound and a carbon powder to obtain a pulverized material; and a heating step of heating the pulverized material to precipitate crystal containing olivine-type AMPO₄ as well as to bind at least one member selected from the group consisting of the organic compound, the carbon powder and a reaction product thereof to the surface of the crystal. Now, the respective steps will be described in detail.

### [MELTING STEP]

The melting step is a step of obtaining a molten material comprising, based on oxides (unit: mol%), from 5 to 40% of A₂O (wherein A is at least one member selected from the group consisting of Li and Na), from 40 to 70% of MO (wherein M is at least one member selected from the group consisting of Fe, Mn, Co and Ni) and from 15 to 40% of P₂O₅ and is a step carried out in order to obtain a solidified material of which at least the most part is composed of an amorphous material in the following cooling step. Since a molten material within the above composition range is capable of being melted and has a moderate viscosity, and thus is capable of being easily treated in the following cooing step, such a molten material is preferred. Hereinafter, "%" representing a composition means an amount based on an oxide (unit: mol%), unless otherwise specified.

In the above composition range of the molten material, if the content of each component (A₂O, MO and P₂O₅) does not satisfy the lower limit or exceeds the upper limit, it becomes difficult to precipitate desired crystal containing olivine-type AMPO₄ in the later heating step. If, in the molten material, the MO content exceeds 70% and the P₂O₅ content is less than 15%, or if the A₂O content is less than 5%, melting becomes difficult. On the other hand, if, in the molten material, the MO content is less than 40% and the P₂O₅ content exceeds 40%, or if the A₂O content exceeds 40%, evaporation of the starting material becomes significant.

The content of the respective components in the molten material is more preferably from 10 to 35% of A₂O, from 40 to 60% of MO and from 20 to 35% of P₂O₅. A molten material having such a composition is capable of being melted, whereby desired crystal containing olivine-type AMPO₄ becomes likely to be obtained. Further, when the content of A₂O in the molten material is adjusted to be from 20 to 30%, the MO content to be from 45 to 55% and the P₂O₅ content to be from 20 to 30%, crystal of almost AMPO₄ may be obtained. The composition of the molten material is suitably selected depending on the target composition of particles, and is basically adjusted so that the total content of the respective components becomes 100%.

When the molten material is made into an amorphous material (a glass), P₂O₅ becomes a framework-forming oxide (network former), A₂O becomes a framework-modifying oxide (network modifier), and MO becomes an intermediate oxide thereof. The element A may be at least one member selected from the group consisting of Li and Na. However, particularly when a phosphate compound employing Li (LiMPO₄) is used as a positive electrode material, it is possible to increase the capacity per unit volume (mass) of a secondary cell, and thus as the element A, Li is preferably used. The element M may be at least one member selected from the group consisting of Fe, Mn, Co and Ni, and for the purposed of reducing the cost of the positive electrode material, as the element M, it is preferred to use at least one member selected from the group consisting of Fe and Mn.

As starting materials of the molten material, a compound containing the element A, a compound containing the element M and a compound containing P are used. These starting materials are mixed in a prescribed ratio so that the composition of the molten material to be obtained becomes the above composition to obtain a starting material mixture, and the starting material mixture is heated under an inert atmosphere or a reduced atmosphere to obtain a molten material. In principle, the composition of the starting material mixture theoretically corresponds to the composition of the molten material obtained from the starting material mixture. However, since in the starting material mixture, a component such as P, which is likely to be lost during melting due to e.g. volatilization, is present, the composition of the obtained molten material sometimes somewhat differs from the converted amount based on oxide (unit: mol%) calculated from the charged amount of the respective starting materials.

In this description, "be melted" means that a starting material mixture is melted and becomes visually transparent.

The inert atmosphere represents an atmosphere containing at least 99 vol% of at least one inert gas selected from the group consisting of nitrogen (N₂) and rare gases such as helium (He) and argon (Ar). The reduced atmosphere represents an atmosphere comprising the above inert gas to which hydrogen (H₂), carbon monoxide (CO), ammonia (NH₃) or the like having a reducing property is added in an amount of at least 0.1 vol%, more preferably from 1 to 10 vol%, and oxygen (O₂) of which content is at most 1 vol%, more preferably at most 0.1 vol%. However, in a case where a gas is generated at the time of decomposition or melting of the starting material, the above atmosphere may not be satisfied during such a situation. Further, the starting material mixture may be melted under an inert atmosphere or reduced atmosphere and under reduced pressure (at most 0.8×10⁵ Pa).

As the compound containing the element A, it is preferred to use at least one member selected from the group consisting of a carbonate of A (A₂CO₃), a hydroxide of A (AOH), a phosphate of A (A₃PO₄) and a hydrogen phosphate of A (A2HPO4, AH₂PO₄). These compounds are preferred for the purpose of easily obtaining desired crystal containing olivine-type AMPO₄. Further, a nitrate of A (ANO₃), a chloride of A (ACI), a sulfate of A (A₂SO₄) and an organic acid salt of A such as an oxalate ((COOA)₂) or an acetate (CH₃COOA) may also be used. A part or all of the at least one member of the above compounds may form a hydrated salt.

As the compound containing the element M, at least one member selected from the group consisting of oxides of M (FeO, Fe₃O₄, Fe₂O₃, MnO, Mn₂O₃, MnO₂, CoO, Co₃O₄, Co₂O₃ and NiO), an oxyhydroxide of M (MO(OH)), a metal of M and phosphates of M (Fe₃(PO₄)₂, FePO₄, Fe₄(P₂O₇)₃, Mn₃(PO₄)₂, MnPO₄, MnZP₂O₇, Co₃(PO₄)₂, Nb(PO₄)_{z} and Ni₂P₂O₇) is preferably used.

These compounds are preferred starting materials for the purposed of easily obtaining desired crystal containing olivine-type AMPO₄. Among them, an oxide of M is preferred because of being available at a low price. Further, a nitrate of M, a chloride of M, a sulfate of M or an organic acid salt of M such as an oxalate, an acetate or a citrate may also be used. A part or all of the at least one member of the above compounds may form a hydrated salt.

As the compound containing P, at least one member selected from the group consisting of phosphorus oxide (P₂O₅), ammonium phosphate ((NH₄)₃PO₄), ammonium hydrogen phosphate ((NH₄)₂HPO₄, NH₄H₂PO₄), phosphoric acid (H₃PO₄), phosphorus acid (H₃PO₃), hypophosphorous acid (H₃PO₂) and a phosphate of the element M is preferably used. These are preferred compounds for the purpose of easily obtaining desired crystal containing olivine-type AMPO4_{.} A part or all of the at least one member of the above compounds may form a hydrated salt.

A preferred combination of the starting material mixture is:
as the compound containing the element A, at least one member selected from the group consisting of a carbonate of A (A₂CO₃), a hydrogen carbonate of A (AHCO₃), a hydroxide of A (AOH), a phosphate of A (A₃PO4), a hydrogen phosphate of A (A₂HPO₄, AH₂PO₄), a nitrate of A (ANO₃), a chloride of A (ACI), a sulfate of A (A₂SO₄) and an organic acid salt of A such as an oxalate ((COOA)₂) or an acetate (CH₃COOA) (provided that a part or all of the at least one member may form a hydrated salt);
as the compound containing the element M, at least one member selected from the group consisting of oxides of M (FeO, Fe₃O₄, Fe₂O₃, MnO, Mn₂O₃, MnO₂, CoO, Co₃O₄, Co₂O₃ and NiO), an oxyhydroxide of M (MO(OH)), a metal of M, and phosphates of M (Fe₃(PO₄)₂, FePO₄, Fe₄(P₂O₇)₃, Mn₃(PO₄)₂, MnPO₄, Mn₂P₂O₇, Co₃(PO₄)₂, Ni₃(PO₄)₂ and Ni₂P₂O₇) (provided that a part or all of the at least one member may form a hydrated salt); and
as the compound containing P, at least one member selected from the group consisting of phosphorus oxide (P₂O₅), ammonium phosphate ((NH₄)₃PO₄), ammonium hydrogen phosphate ((NH₄)₂HPO₄, NH₄H₂PO₄), phosphoric acid (H₃PO₄), phosphorus acid (H₃PO₃), hypophosphorous acid (H₃PO₂) and a phosphate of the element M (provided that a part or all of the at least one member may form a hydrated salt).

A more preferred combination is:
as the compound containing the element A, a carbonate of A or a hydrogen carbonate of A, as the compound containing the element M, an oxide of M (provided that a part or all of the at least one member may form an oxysalt), and as the compound containing P, ammonium hydrogen phosphate.

Further, a reducing agent may be added to the starting material mixture. As the reducing agent, carbon, a substance which generates CO or NH₃ when decomposed, phosphorus acid (salt), hypophosphorous acid (salt), a metal M or the like may be used. Such a reducing agent plays a role to maintain the melting atmosphere for the starting material mixture being under an inert atmosphere or a reduced atmosphere. Among them, carbon is preferred because of the low price and ease in handling. Further, the reducing agent may be put in a container and then placed in a furnace when such a space is available in the furnace.

Purity of each starting material is not particularly limited as long as it is within a range where desired properties do not deteriorate, but the purity excluding hydration water is preferably at least 99%, more preferably at least 99.9%. Particle size of each starting material is also not particularly limited as long as within a range in which a homogeneous molten material may be obtained when the starting material is melted. It is preferred that the respective starting materials are dry or wet mixed by using a mixing/pulverizing means such as a mixer, a ball mill or a planetary mill, and then is melted.

The container used for melting the starting material mixture is preferably made of alumina, carbon, silicon carbide, zirconium boride, titanium boride, boron nitride, platinum or a platinum alloy containing rhodium, and a container made of a refractory bricks may also be used. Further, for the purpose of preventing volatilization and evaporation, it is preferred that the container is covered with a lid during melting. It is preferred that a container provided with an outlet is used so that the subsequent cooling step will easily be carried out.

The melting is preferably carried out by using a resistance heating furnace, a high-frequency induction furnace or a plasma-arc furnace. The resistance heating furnace is preferably an electric furnace provided with a heating element made of a metal such as a nichrome alloy, silicon carbide or molybdenum silicide. The high-frequency induction furnace may be one which is provided with an induction coil and is capable of controlling the output. The plasma-arc furnace may be one which is provided with electrodes made of e.g. carbon and is capable of utilizing plasma arc generated by the electrodes. Further, melting by infrared heating or laser direct heating may also be employed.

The starting material mixture may be subjected to melting in the form of powder, or a preliminarily formed mixture may be melted. The melting of the starting material mixture is preferably carried out in an inert atmosphere or a reduced atmosphere heated to a temperature of at least 800 °C, more preferably at a temperature of from 1,000 to 1,400 °C. Further, the obtained glass molten material may be stirred in order to increase the uniformity.

### [COOLING STEP]

The cooling step is a step of cooling the above molten material rapidly to the vicinity of room temperature to obtain a solidified material. The solidified material is preferably an amorphous material. Further, the solidified material may contain a small amount of a crystallized material. The small amount of a crystallized material will be a nucleus of the crystal which will be finally obtained in the following heating step, and has a function to make the control of crystallization easier. When the amorphous material is crystallized to form a phosphate compound, it is possible to shorten the reaction time as compared with e.g. the case where a compound is synthesized from a plurality of powders by a solid phase reaction, and further it is possible to increase the uniformity of chemical composition, mineral composition, structure and so on. In addition, since volume change due to crystallization of the solidified material in the heating step is small and is a slight shrinkage, it is possible to suppress deterioration of the binding state of e.g. an organic compound or a carbon powder.

The cooling rate of the molten material is preferably at least 100 °C/s, more preferably at least 1×10⁴ °C/s. When the cooling rate is at least the lower limit, the amorphous material is likely to be obtained. The amorphous material becomes more likely to be obtained as the cooling rate is high, but taking the manufacturing facility or mass productivity into consideration, the upper limit is about 1×10¹⁰ °C/s, and from the viewpoint of practical use, at most 1×10⁸ °C/s is preferred. The cooling of the molten material is preferably carried out under an inert atmosphere or a reduced atmosphere. In a case of rapid cooling in an open system, it is preferred to let the atmosphere around the contact portion between the molten material and the cooling medium be under an inert atmosphere or a reduced atmosphere.

In the cooing step, a method wherein the molten material is dropped into the site between rollers of a twin roller rotating at a high speed to obtain a solidified material in the shape of flakes or a method wherein the molten material is pressed on a cooled carbon plate or metal plate to obtain a solidified material is preferably employed. In particular, by the former method, the rate of cooling is very high, and a large amount may be treated, and thus such a method is more preferred. As the twin roller, one made of a metal, carbon or ceramics may preferably be used. Further, a method wherein a solidified material in the form of a fiber (long fiber) is continuously reeled from the molten material by a drum rotating at a high speed or a method wherein a spinner provided with a tiny hole at a side wall is rotated at a high speed to obtain a solidified material in the form of a fiber (short fiber) may also be employed. By using such an apparatus, it is possible to cool the molten material efficiently and rapidly and to obtain a solidified material having a high purity and a uniform chemical composition.

In the case where the solidified material is in the form of flakes, it is preferred to cool rapidly so that the average thickness will be at most 200 µm, more preferably at most 100 µm. In the case where the solidified material is in the form of a fiber, it is preferred to cool rapidly so that the average diameter will be at most 50 µm, more preferably at most 30 µm. The average thickness or average diameter is adjusted to be at most the above upper limit, whereby it is possible to increase crystallization efficiency in the following pulverizing step and the heating step. The average thickness in the case where the solidified material is in the form of flakes may be measured with a vernier caliper or a micrometer. The average diameter in the case where the solidified material is in the form of a fiber may be measured by the above method or microscope observation.

### [PULVERIZING STEP]

The pulverizing step is a step of mixing and pulverizing the solidified material obtained in the cooling step and at least one member selected from the group consisting of an organic compound and a carbon powder to pulverize the solidified material into a desired form of a particle and to obtain a mixture of a pulverized material, the organic compound or the carbon powder. It is preferred to control the particle size of the solidified material and its distribution to be within a desired range in the pulverizing step and then to crystallize the solidified material in the following heating step. If the solidified material having its form unchanged is heated and then is pulverized, stress may be concentrated in the pulverized material, and the properties may deteriorate.

The solidified material obtained in the cooling step is pulverized so that phosphate compound particles having a desired particle size and its distribution will be obtained, and then the heating step is carried out, whereby it is possible to obtain olivine-type phosphate compound particles which is excellent in uniformity of the particle size and chemical composition and has a high crystallinity. Further, it is considered that a large part of internal stress generated at the time of pulverizing will be lost in the heating step, and thus it is possible to reproducibly obtain a function as a positive electrode material which olivine-type phosphate compound particles essentially have, and further, it is possible to increase its substantivity.

The pulverizing step is preferably carried out by using e.g. a ball mill, a jet mill or a planetary mill. Pulverizing in the pulverizing step may be dry pulverizing, but the pulverizing is preferably wet pulverizing with a view to dispersing at least one member selected from the group consisting of an organic compound and a carbon powder on the surface of the pulverized material of the solidified material. As a dispersion medium at the time of wet pulverizing, water or an organic solvent such as ethanol, isopropyl alcohol, acetone, hexane or toluene may preferably be used. Water is particularly preferred to be used as the dispersion medium because of ease in handling and its affordable price and safety.

Mixing order of the solidified material, the dispersion medium, the organic compound and the carbon powder is not particularly limited. The solidified material and at least one member selected from the group consisting of an organic compound and a carbon powder may be mixed in the form of a slurry or a paste. Since the dispersion medium is required to be removed after mixing, the amount of the dispersion medium is preferably small in a range in which pulverizing is possible. The average particle size of the pulverized solidified material is not particularly limited and is suitably set in accordance with its use, and in the case where the solidified material is in the form of flakes, the average particle size after pulverizing is, by the median value converted based on volume, preferably from 10 nm to 10 µm, more preferably from 50 nm to 5 µm, further preferably from 300 nm to 3 µm. Measurement of the particle size may be carried out by using, for example, a laser diffraction/scattering particle size measuring device. In the case where the solidified material is in the form of a fiber, the length is preferably adjusted to be from 10 nm to 50 µm. Ones having a particle size or a length exceeding these upper limits are preferably removed by e.g. a sieve.

The at least one member selected from the group consisting of an organic compound and a carbon powder mixed in the solidified material, functions as a conductive material after heating. The carbon powder dispersed on the surface of the pulverized material adheres to the surface of the phosphate compound particles to be formed in the heating step, whereby the conductivity of the phosphate compound particles is improved. The organic compound functions as a binder of the carbon powder to the phosphate compound particles, and in addition, for example, the organic compound itself will be thermally decomposed in the heating step and further be carbonized, whereby the conductivity of the phosphate compound particles will be improved. Both the organic compound and the carbon powder function as a conductive material, and thus at least one member selected from the group consisting of them may be mixed.

In the case where a carbon powder is used as the conductive material, it is preferably used in combination with an organic compound for the purpose of improving the binding force to the phosphate compound particles. That is, it is preferred that an organic compound is singly mixed, or an organic compound together with a carbon powder is mixed, with the solidified material. The carbonized material, which is the reaction product of the organic compound in the heating step, itself functions as a conductive material as well as functions as a binder of the carbon powder. Accordingly, the organic compound is preferably one which is thermally decomposed in the heating step and has a property to be carbonized by detachment of hydrogen atoms and oxygen atoms, whereby it is possible to let the reaction product of the organic compound in the heating step function as a conductive material.

The organic compound is preferably one which is decomposed and carbonized at a temperature higher than the temperature of nucleus formation and grain growth of the solidified material (pulverized material), but since the volume change due to crystallization of the solidified material is small and is a slight shrinkage, the organic compound is not necessarily limited by its thermal decomposition temperature. Further, since the organic compound itself functions as a binder of the carbon powder to the phosphate compound particles, the organic compound may be one which is not thermally decomposed or carbonized in the heating step, depending on circumstances. In such a case, the organic compound is used in combination with a carbon powder. As a solvent for the organic compound, water is preferably used, and the organic compound is preferably water-soluble so as to be uniformly dispersed on the surface of the pulverized material of the solidified material. Further, the organic compound preferably has a reducing property in order to prevent oxidation of the solidified material, particularly of its surface site, at the time of pulverization.

Such an organic compound may, for example, be a monosaccharide such as glucose, fructose or galactose, an oligosaccharide such as sucrose, maltose, cellobiose or trehalose, inverted sugar, a polysaccharide such as dextrin, amylose, amylopectin or cellulose, or a related substance thereof. The organic compound is likely to have a high solubility in water as the molecular weight is low. Particularly, monosaccharides and a part of oligosaccharides have a strong reducing property. Further, ascorbic acid, an amino acid such as alanine or glycin, or a low-molecular peptide may be used. Further, an organic compound having a reducing functional group such as an aldehyde group or a ketone group may also be used. Among them, glucose, sucrose, glucose-fructose inverted sugar, caramel, a water-soluble starch, an α-starch, carboxymethyl cellulose, or the like may preferably be used.

As the carbon powder, carbon black, graphite, acetylene black, or the like may preferably be used. The carbon powder is mixed at the time of pulverization of the solidified material, whereby it becomes not necessary to separately provide a step wherein the carbon powder is mixed after the heating step. Further, the carbon powder is mixed together with the organic compound at the time of pulverization of the solidified material, whereby the distribution of the carbon powder in the positive electrode material becomes uniform, and contact area with the organic compound or its thermally decomposed material (carbonized material) becomes large. It thereby becomes possible to increase the binding force of the carbon powder to the phosphate compound particles.

The amount of the at least one member selected from the group consisting of an organic compound and a carbon powder by a ratio to the amount of the solidified material is such that when the pulverized material is heated to obtain phosphate compound particles, the carbon content is preferably from 0.1 to 20 mass% in the total amount (100 mass%) of the solidified material and the organic compound and/or the carbon powder. In the case where the organic compound and the carbon powder are used in combination, their total amount is adjusted to be within the above range. If the amount of the organic compound and the carbon powder is such that the carbon content in the phosphate compound particles is less than 0.1 mass%, it is not possible to sufficiently increase the conductivity of the phosphate compound particles. On the other hand, if the amount of the organic compound and the carbon powder is such that the carbon content in the phosphate compound particles exceeds 20 mass%, properties as a positive electrode material of the phosphate compound particles may deteriorate.

### [HEATING STEP]

The heating step is a step of heating the pulverized material to precipitate a crystallized material containing olivine-type AMPO₄ crystal thereby to prepare crystal particles of a phosphate compound as well as to bind at least one member selected from the group consisting of the organic compound, the carbon powder and a reaction product thereof to the surface of the crystal particles of the phosphate compound. In a case where the pulverizing step is carried out by wet pulverizing, it is preferred that the dispersion solvent is removed by e.g. filtration, reduced-pressure drying or heat drying, followed by the heating step. The step of removing the dispersion solvent may be incorporated in the heating step.

The heating step is preferably carried out at a temperature of from 400 to 800 °C. If the heating temperature is lower than 400 °C, crystal is less likely to be precipitated even when continuously heated. If the heating temperature exceeds 800 °C, the pulverized material is likely to be melted. The heating temperature is more preferably from 400 to 650 °C. When such a heating temperature is employed, particles having a moderate particle size and particle size distribution are likely to be obtained.

The heating step has an effect to loose or remove stress of the pulverized material and the obtained crystal particles of the phosphate compound. It is considered that energy by the heating for crystallization is uniformly transmitted to the pulverized material, whereby it is possible to loose or remove stress accumulated by the pulverization of the solidified material. By the heating step, it is possible to loose or remove stress in the pulverized material as well as stress in the obtained crystallized material.

The heating step is not limited to such that the temperature is maintained constant, and may be carried out by setting multiple steps of temperature. Since in the range of from 400 to 800 °C, particle size of the crystal to be precipitated tends to be large as the heating temperature is high, the heating temperature may be set according to the desired particle size. The heating time is preferably from 2 to 32 hours from the viewpoint of crystal core formation and grain growth. The particle size of the crystal may be increased even by a longer heating time. However, since the influence of the heating time is not so large as the heating temperature, when the particle size of the crystal containing olivine-type AMPO₄ is desired to be finely adjusted, the heating time is preferably adjusted. The average particle size of the crystal particles after heating is, by the median value converted based on volume, preferably from 100 nm to 30 µm, more preferably from 100 nm to 5 µm.

The heating step is carried out under an inert atmosphere or a reduced atmosphere. A specific inert atmosphere or reduced atmosphere is as described above. Further, a container containing a reducing agent may be loaded in a heating furnace. According to such a heating step, it is possible to prevent oxidation of M ions (for example, a change from M²⁺ to M³⁺) in the pulverized material (solidified material) as well as to promote reduction of M ions having a higher oxidation number which may be contained in the pulverized material (for example, a change from M³⁺ to M²⁺). It thereby becomes possible to obtain the crystal of olivine-type phosphate compound (AMPO₄) in a better reproducibility. The melting step and the cooling step are carried out under an inert atmosphere or a reduced atmosphere for the same reason. Further, the heating step is carried out under an inert atmosphere or a reduced atmosphere, whereby it is possible to promote carbonization of the organic compound.

The organic compound and/or the carbon powder adhered to the surface of the pulverized material of the solidified material in the pulverizing step bind to the surface of the crystal particles of the phosphate compound formed in the heating step and function as a conductive material. That is, the organic compound is thermally decomposed in the heating step, and further at least a part turns to a carbonized material (reaction product) and functions as a conductive material. The thermal decomposition of the organic compound is preferably carried out at a temperature of at most 400 °C, and the carbonization is preferably carried out at a temperature of at most 600 °C. Since the organic compound adhered to the surface of the pulverized material is carbonized in one step wherein heating is also carried out, and volume change due to crystallization of the solidified material is small and is a tiny shrinkage, it is possible to bind the carbonized material of the organic compound to the surface of the crystal particles of the phosphate compound uniformly and strongly.

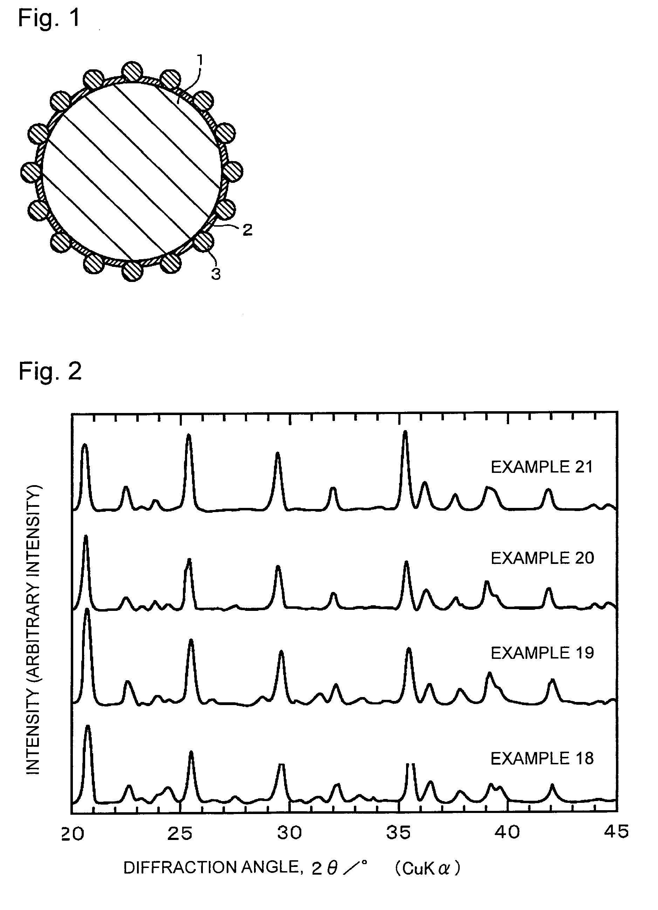

Since the carbon powder is heated in a state of being adhered to the surface of the pulverized material of the solidified material, and the volume change due to the crystallization of the solidified material is small and is a tiny shrinkage, it is possible to bind the carbon powder to the surface of the crystal particles of the phosphate compound uniformly and strongly. Further, in a case where the carbon powder is used in combination with an organic compound, as shown in Fig. 1, the carbonized material 2 of the organic compound covering the surface of the crystal particle 1 functions as a binder of the carbon powder 3, and accordingly it is possible to bind the carbon powder 3 to the surface of the crystal particle 1 more strongly. From this point of view, the carbon powder is preferably used in combination with the organic compound. However, it is also possible to- let the carbon powder by itself function as a conductive material:

Further, the organic compound and/or the carbon powder adhered to the surface of the solidified material function also as a grain growth inhibitor of the crystallized material formed by the crystallization of the solidified material (pulverized material) in the heating step. That is, due to the organic compound, the carbon powder or the reaction product thereof (a thermal decomposition product or carbonized product of the organic compound), the particles by crystallized material of the solidified material (pulverized material) become less likely to get into contact with each other, whereby the grain growth of the crystal particles is suppressed. When a phosphate compound particles having a small particle size is used as a positive electrode material for a secondary cell, diffusion path of metal ions, such as lithium ions, having a role of electric conduction becomes short, and the reaction area expands, whereby it is possible to increase the capacity of the secondary cell.

When the above melting, cooling, pulverizing and heating steps are thoroughly carried out, it is possible to prepare olivine-type phosphate compound particles and at the same time, to obtain a positive electrode material for a secondary cell wherein a conductive material based on an organic compound and/or a carbon powder (a carbonized product of the organic compound, the carbon powder, a mixture thereof, etc.) is uniformly and strongly bound to the surface of the olivine-type phosphate compound particles. In a case where secondary particles are present in the obtained positive electrode material for a secondary cell, they may be crushed or pulverized to such an extent that the primary particles are not broken.

When the olivine-type phosphate compound particles of the present invention are employed as a positive electrode material for a secondary cell, since the particles themselves have a low conductivity, carbon is required to be added, and thus the crystal particles are preferably as fine as possible. The average particle size of the olivine-type phosphate compound particles is, by the median value converted based on volume, preferably from 10 nm to 5 µm, more preferably from 50 nm to 3 µm, for the purpose of improving the conductivity of the particles. It is preferably at least the lower limit because the volume of the particles is not too large, and a positive electrode for a cell is thereby produced easily. The particle size may be measured by using, for example, a laser diffraction/scattering particle size measuring device. The particles are preferably composed only of primary particles. Further, in a case where a carbonized material or the like is present on the surface of the olivine-type phosphate composition compound particles, the average particle size is, by the median value converted based on volume, preferably from 10 nm to 5 µm. In such a case, since the primary particles are likely to be agglomerated, the particles are preferably crushed or lightly pulverized before they are employed as a positive electrode material.

According to the production process of the present invention, it is possible to obtain olivine-type phosphate compound particles excellent in uniformity of particle size and chemical composition and having a high crystallinity. By such particles, it is possible to improve the reliability based on the uniformity of particle size and chemical composition. Further, since the obtained particles have a high crystallinity, it is possible to suppress a functional decline during repeated use. Additionally, since a conductive material is bound to the surface of the particles uniformly and strongly, it is possible to improve the conductivity of the positive electrode material for a secondary cell and its reliability. Thus, it becomes possible to improve the capacity of lithium-ion secondary cells as well as to provide a positive electrode material for a secondary cell capable of maintaining its properties and reliability for a long period of time.

The olivine-type phosphate compound particles produced by the production process of the present invention preferably have a composition represented by the following formula (1):

AₓM_{y}PO_{w} (1)

wherein x and y satisfy 0<x≦1.5 and 0.8≦y≦1.2, and w is a number dependent on the valence of the element M and is a number represented by w=(x+yz+5)/2 (wherein z is the valence of the element M).

Since the olivine-type phosphate compound particles having the above composition are excellent in uniformity of chemical composition, properties, reliability, etc., it is possible to improve the properties of the positive electrode material for a secondary cell.

Further, the olivine-type phosphate compound particles more preferably have a composition represented by the following formula (2), i.e. they are more preferably substantially composed only of olivine-type LiMPO₄:

LiₓM_{y}PO_{w} (2)

wherein x and y satisfy 0.95≦x≦1.05 and 0.95≦y≦1.05, and w-is a number dependent on the valence of the element M and is a number represented by w=(x+yz+5)/2 (wherein z is the valence of the element M).

Such olivine-type phosphate compound particles are further preferably crystal particles of the olivine-type phosphate compound.

Olivine-type phosphate compound particles are suitable as a positive electrode material for a secondary cell.

Further, the positive electrode material for a secondary cell produced in the present invention is one having a conductive material based on an organic compound or a carbon powder bound to the surface of the above-described olivine-type phosphate compound particles. Such a positive electrode material for a secondary cell preferably contains a carbonized product of the organic compound or the carbon powder which function as a conductive material in an amount of from 0.1 to 20 mass% as the carbon content. It is thereby possible to improve the conductivity of the positive electrode material for a secondary cell. Further, the carbon content in the positive electrode material for a secondary cell is more preferably from 2 to 10 mass%, whereby it is possible to improve the efficiency of the conductive material.

### EXAMPLES

Now, the present invention will be described in detail with reference to Examples. However, it should be understood that the present invention is by no means restricted to such specific Examples.

### EXAMPLES 1 to 10

### [HEATING STEP]

Lithium carbonate (Li₂CO₃); triiron tetraoxide (Fe₃O₄), manganese dioxide (MnO₂), tricobalt tetraoxide (Co₃O₄) or nickel oxide (NiO); and ammonium dihydrogen phosphate (NH₄H₂PO₄) were separately weighed so that the composition of the molten material to be obtained would have a composition represented by percentages as shown in Table 1 based on oxides (unit: mol%) of Li₂O, MO (wherein M is at least one member selected from the group consisting of Fe, Mn, Co and Ni) and P₂O₅, and were wet-mixed and pulverized to prepare a starting material mixture.

Then, a crucible made of a platinum alloy containing 20 mass% of rhodium provided with a nozzle was charged with the starting material mixture, and while N₂ gas was flown at a rate of 1 L/min, by using an electric furnace provided with a heating element made of molybdenum silicide, the temperature was raised at a rate of 300 °C/h, and the starting material mixture was heated at 1,300 °C for 0.5 hour to be melted. The starting material mixture was heated and melted in such a state that carbon black contained in an alumina container was placed in the electric furnace.

### [COOLING STEP]

Next, while the lower end part of the nozzle provided to the crucible was heated by an electric furnace, the molten material was dropped, and the dropped molten material was permitted to pass through a stainless-steel twin roller having a diameter of about 15 cm and rotating at 400 rpm to rapidly cool the molten material at a cooling rate of 1×10⁵ °C/s, thereby to prepare a solidified material in the form of flakes. To the contact portion between the twin roller and the molten material, N₂ was blown. The thickness of 10 flakes obtained in each Example was measured, and the thickness of the flakes was from 50 to 150 µm. At this point, by using a part of each solidified material (flakes), the glass transition temperature and the crystallization temperature were preliminarily determined by a differential scanning calorimeter (DSC).

### [PULVERIZING STEP]

30 g of the above solidified material in the form of flakes was added to 50 mL of 7.5 mass% glucose aqueous solution and was wet-pulverized by using a bowl made of zirconia and a planetary mill. In Example 4, the average particle size (after glucose was washed with water and removed) of the solidified material was measured by using a laser diffraction/scattering particle size distribution measuring device (manufactured by HORIBA, Ltd., device name: LA-950), whereby the median particle size converted based on volume was 0.82 µm.

### [HEATING STEP]

The pulverized material in the form of a slurry was dried at 110 °C and then was heated in a 3 vol% H₂-Ar atmosphere at a heating temperature as shown in Table 1 for 8 hours to precipitate crystal particles containing olivine-type LiMPO₄.

Mineral phase of the obtained crystal particles was identified by using a X-ray diffractometer. As a result, in Examples 1 to 5, a diffraction pattern similar to an existing diffraction peak of LiFePO₄ (PDF number: 01-070-6684) was obtained. In Examples 6 to 7, a diffraction pattern similar to an existing diffraction peak of LiMnPO₄ (PDF number: 01-077-0718) was obtained. In Examples 8 to 9, a diffraction pattern similar to an existing diffraction peak of LiCoPO₄ (PDF number: 00-032-0552) was obtained. In Example 10, a diffraction pattern similar to an existing diffraction peak of LiNiPO₄ (PDF number: 00-032-0578) was obtained.

The composition of crystal portion of the crystal particles obtained in Examples 3 to 5 was determined by using a X-ray fluorescence spectrometer and an atomic absorption spectrometer. Fe and P were quantitatively determined by using a X-ray fluorescence spectrometer. Li was quantitatively determined by using a an atomic absorption spectrometer. First, the organic substance on the surface of the crystal particles was oxidized and removed by 4 M HNO₃, and then 6 M HCI was added thereto and the crystal particles were decomposed in a hot-water bath. Li in the decomposition liquid was quantitatively determined by the atomic absorption photometry. The compositional formula was obtained from the respective quantitative values. In this regard, however, it was assumed that every Fe was present as Fe²⁺. As a result, the composition in Example 3 was Li_{0.82}Fe_{0.98}PO_{3.89}, the composition in Example 4 was Li_{0.99}Fe_{1.02}PO_{4.02}, and the composition in Example 5 was Li_{1.14}Fe_{0.98}PO_{4.04}.

Next, the surface of the crystal particles obtained in Example 4 was observed with a scanning electron microscope. As a result, it was confirmed that a carbonized matter of glucose was uniformly adhered to the surface of the crystal particles. It was confirmed that the same applies to the crystal particles in the other Examples. Further, the carbon content in the crystal particles obtained in Example 4 was quantitatively determined by using a carbon analyzer, and it was 4.2 mass% as the amount of C.

The particle size distribution of the particles in Example 4 was measured by using a laser diffraction/scattering particle size distribution measuring device (manufactured by HORIBA, Ltd., device name: LA-950), and the median particle size converted based on volume was 1.9 µm. Further, the same measurement was carried out after the carbonized material on the surface was removed, whereby the median particle size converted based on volume was 0.85 µm.

### EXAMPLE 11

The melting step and the cooling step were carried out in the same manner as in Example 4 by using a starting material mixture having the same composition as in Example 4. Next, 30 g of the obtained solidified material and 2.25 g of acetylene black were added to 50 mL of 3.75 mass% glucose aqueous solution and then were wet-pulverized by using a bowl made of zirconia and a planetary mill. This pulverized material in the form of a slurry was dried at 110 °C and then was heated in the same manner as in Example 4 to precipitate crystal particles containing LiFePO₄.

The surface of the obtained crystal particles was observed with a scanning electron microscope. As a result, it was confirmed that a carbonized product of glucose and carbon particles derived from acetylene black were uniformly adhered to the surface of the crystal particles. Further, it was confirmed that the carbonized product of glucose functions as a binder of the carbon particles derived from acetylene black from the existence form of the carbonized product of glucose and the carbon particles derived from acetylene black. Further, the carbon content in the crystal particles was quantitatively determined in the same manner as in Example 4, and it was 9.5 mass% as the amount of C.

### EXAMPLE 12

The melting step and the cooling step were carried out in the same manner as in Example 4 by using a starting material mixture having the same composition as in Example 4. Next, 30 g of the obtained solidified material, 0.75 g of carbon black and 3.38 g of a water-soluble starch were added to 50 mL of distilled water and were wet-pulverized by using a bowl made of zirconia and a planetary mill. Then, this pulverized material in the form of a slurry was heated to 90 °C while stirred to gelatinize the starch (to let the starch become α-type) thereby to obtain a gel-like mixture.

Then, the gel-like mixture was frozen in a freezer and was dried in a vacuum. This dried material was heated in the same manner as in Example 4, whereby crystal particles containing LiFePO₄ were precipitated. The surface of the obtained crystal particles was observed with a scanning electron microscope. As a result, it was confirmed that a carbonized product of the starch and carbon particles derived from carbon black were uniformly adhered to the surface of the crystal particles. Further, the carbon content in the particles was quantitatively determined in the same manner as in Example 4, and it was 4.2 mass% as the amount of C.

### EXAMPLE 13

The melting step and the cooling step were carried out in the same manner as in Example 4 by using a starting material mixture having the same composition as in Example 4. Next, 30 g of the obtained solidified material was added to 50 mL of 10.1 mass% sucrose aqueous solution and was wet-pulverized by using a bowl made of zirconia and a planetary mill. Then, this pulverized material in the form of a slurry was heated to 90 °C to obtain a caramel-like mixture. This mixture was heated in the same manner as in Example 4, whereby crystal particles containing LiFePO₄ were precipitated.

The surface of the obtained crystal particles was observed with a scanning electron microscope. As a result, it was confirmed that a carbonized product of sucrose was uniformly adhered to the surface of the crystal particles. Further, the carbon content in the crystal particles was quantitatively determined in the same manner as in Example 1, and it was 7.1 mass% as the amount of C.

### EXAMPLES 14 to 29

The melting step and the cooling step were carried out in the same manner as in Example 1 by using a starting material mixture prepared by mixing and pulverizing lithium carbonate (Li₂CO₃); at least two members selected from the group consisting of triiron tetraoxide (Fe₃O₄), manganese dioxide (MnO₂), tricobalt tetraoxide (Co₃O₄) and nickel oxide (NiO); and ammonium dihydrogen phosphate (NH₄H₂PO₄) so that the composition of the molten material to be obtained would have a composition represented by percentages as shown in Table 1 based on oxides (unit: mol%) of Li₂O, MO (wherein M is at least two members selected from the group consisting of Fe, Mn, Co and Ni) and P₂O₅.

Next, the obtained solidified material was added to a glucose aqueous solution and then was pulverized in the same manner as in Example 1. This pulverized material in the form of a slurry was dried at 110 °C and then was heated in the same manner as in Example 1 to precipitate crystal particles containing LiMPO₄.

Mineral phase of the respective obtained crystal particles was identified by using a X-ray diffractometer. As a result, in each Example, at least one of a diffraction pattern similar to an existing diffraction peak of LiFePO₄ (PDF number: 01-070-6684), a diffraction pattern similar to an existing diffraction peak of LiMnPO₄ (PDF number: 01-077-0718), a diffraction pattern similar to an existing diffraction peak of LiCoPO₄ (PDF number: 00-032-0552) and a diffraction pattern similar to an existing diffraction peak of LiNiPO4 (PDF number: 00-032-0578) was obtained. The X-ray diffusion patterns of the particles obtained in Examples 18 to 21 are shown in Fig. 2.

The composition of crystal portion of the crystal particles obtained in Examples 19 to 20 was determined by using a X-ray fluorescence spectrometer and an atomic absorption spectrometer. Fe, Mn, Co, Ni and P were quantitatively determined by using a X-ray fluorescence spectrometer. Li was quantitatively determined by using a an atomic absorption spectrometer in the same manner as in Example 3. As a result, the composition in Example 19 was Li_{0.99}Fe_{0.59}Mn_{0.40}PO_{3.99}, and the composition in Example 20 was Li_{1.02}Fe_{0.39}Mn_{0.62}PO₄.₀₂. Further, the state of the surface of the crystal particles in each Example was observed in the same manner as in Example 4, and it was confirmed that the same surface state as in Example 4 was obtained. The same applies to the carbon content.

### COMPARATIVE EXAMPLE 1

Lithium carbonate (Li₂CO₃), triiron tetraoxide (Fe₃O₄) and ammonium dihydrogen phosphate (NH₄H₂PO₄) were separately weighed so that the composition of the molten material to be obtained would be, based on oxides (unit: mol%) of Li_{2O}, FeO and P₂O₅, 37.5%, 25.0% and 37.5%, and were dry-mixed and pulverized to prepare a starting material mixture, and the melting, cooling, pulverizing and heating (temperature: 540 °C) steps were carried out in the same manner as in Example 1 except that all steps were carried out in the atmosphere. In the melting step, a reducing agent (carbon black) was not placed. Mineral phase of the obtained particles was identified by using a X-ray diffractometer, and a diffraction pattern similar to an existing diffraction peak of Li₃Fe₂(PO₄)₃ (PDF number: 01-078-1106) was obtained. Since the melting step and the heating step were not carried out in an inert atmosphere or a reduced atmosphere, crystal particles containing LiMPO₄ were not obtained.

**TABLE 1**

| | Molten material composition | | | | | | | Heating temperature (°C) |
|---|---|---|---|---|---|---|---|---|
| | Li₂O | MO | | | | | P₂O₅ | |
| | | FeO | MnO | CoO | NiO | Sum | | |
| Ex. 1 | 7.6 | 61.0 | - | - | - | 61.0 | 31.4 | 510 |
| Ex. 2 | 14.2 | 56.7 | - | - | - | 56.7 | 29.2 | 530 |
| Ex. 3 | 20.9 | 52.2 | - | - | - | 52.2 | 26.9 | 550 |
| Ex. 4 | 24.8 | 49.6 | - | - | - | 49.6 | 25.6 | 550 |
| Ex. 5 | 28.4 | 47.3 | - | - | - | 47.3 | 24.4 | 550 |
| Ex. 6 | 16.7 | - | 55.6 | - | - | 55.6 | 27.8 | 490 |
| Ex. 7 | 21.1 | - | 52.6 | - | - | 52.6 | 26.3 | 490 |
| Ex. 8 | 16.7 | - | - | 55.6 | - | 55.6 | 27.8 | 580 |
| Ex. 9 | 21.1 | - | - | 52.6 | - | 52.6 | 26.3 | 580 |
| Ex.10 | 21.1 | - | - | - | 52.6 | 52.6 | 26.3 | 580 |
| Ex.11 | 24.8 | 49.6 | - | - | - | 49.6 | 25.6 | 550 |
| Ex.12 | 24.8 | 49.6 | - | - | - | 49.6 | 25.6 | 550 |
| Ex. 13 | 24.8 | 49.6 | - | - | - | 49.6 | 25.6 | 550 |
| Ex. 14 | 21.1 | 31.6 | 21.1 | - | - | 52.6 | 26.3 | 550 |
| Ex.15 | 21.1 | 21.1 | 31.6 | - | - | 52.6 | 26.3 | 550 |
| Ex.16 | 28.6 | 28.6 | 19.1 | - | - | 47.6 | 23.8 | 550 |
| Ex.17 | 28.6 | 19.1 | 28.6 | - | - | 47.6 | 25.0 | 550 |
| Ex.18 | 25.0 | 40.0 | 10.0 | - | - | 50.0 | 25.0 | 540 |
| Ex.19 | 25.0 | 30.0 | 20.0 | - | - | 50.0 | 25.0 | 530 |
| Ex. 20 | 25.0 | 20.0 | 30.0 | - | - | 50.0 | 25.0 | 510 |
| Ex. 21 | 25.0 | 10.0 | 40.0 | - | - | 50.0 | 25.0 | 510 |
| Ex. 22 | 25.0 | 30.0 | - | 20.0 | - | 50.0 | 25.0 | 550 |
| Ex. 23 | 25.0 | 30.0 | - | - | 20.0 | 50.0 | 25.0 | 590 |
| Ex. 24 | 25.0 | 16.7 | 16.7 | 16.7 | - | 50.0 | 25.0 | 560 |
| Ex. 25 | 25.0 | 12.5 | 12.5 | 12.5 | 12.5 | 50.0 | 25.0 | 520 |
| Ex. 26 | 25.0 | - | 25.0 | 25.0 | - | 50.0 | 25.0 | 520 |
| Ex. 27 | 25.0 | - | 25.0 | - | 25.0 | 50.0 | 25.0 | 520 |
| Ex. 28 | 25.0 | - | - | 25.0 | 25.0 | 50.0 | 25.0 | 520 |
| Ex. 29 | 25.0 | - | 16.7 | 16.7 | 16.7 | 50.0 | 25.0 | 520 |
| Comp. Ex. 1 | 37.5 | 25.0 | - | - | - | - | 37.5 | 540 |

### EXAMPLE 30

The crystal particles obtained in Example 4 as an active material, a polyvinylidene fluoride as a binder and acetylene black as a conductive material were weighed so that the ratio would be 85:5:10 by mass, and they were well mixed in N-methylpyrrolidone as a solvent to obtain a slurry. Next, this slurry was applied on an aluminum foil having a thickness of 30 µm with a bar coater. The solvent was dried at 120 °C in the atmosphere to be removed, and then the coating layer was consolidated by a roll press, and the aluminum foil was cut into strips having a width of 10 mm and a length of 40 mm.

The coating layer was peeled except for an edge portion of 10×10 mm of the strip-shaped aluminum foil to obtain an electrode. The thickness of the coating layer of the obtained electrode after roll press was 20 µm. The obtained electrode was dried in a vacuum at 150 °C, and then it was brought into a glove box filled with a purified argon gas and was permitted to face to a counter electrode wherein lithium foil was compressed to a nickel mesh via a separator made of a porous polyethylene film, and further the both sides were wedged between polyethylene plates to be fixed.

This facing electrodes were put in a polyethylene beaker, and a non-aqueous electrolyte solution obtained by dissolving lithium hexafluorophosphate in a mixed solvent of ethylene carbonate and ethylmethyl carbonate (in a volume ratio of 1:1) in a concentration of 1 mol/L was poured thereto to let the facing electrodes be efficiently impregnated. The electrodes after impregnation with electrolyte solution was removed from the beaker and was put in a bag made of aluminum laminate film, and the lead portion was taken out from the bag followed by sealing to obtain a half-cell. Characteristics of this half-cell were measured as follows.

### [EVALUATION OF CHARGE-DISCHARGE CHARACTERISTIC OF POSITIVE ELECTRODE FOR Li-ION SECONDARY CELL]

First, the obtained half-cell was put in a constant-temperature oven of 25 °C and was connected to a constant current charge-discharge tester (manufactured by Hokuto Denko Corporation) to carry out a charge-discharge test. As to current density, the current value per mass of the electrode active material (mass except for the conductive material and the binder) was set to be 85 mA/g, and charge and discharge were carried out. The charge cut-off voltage was set to be 4.2 V against the Li counter electrode as a reference, and discharge was started immediately after the voltage reached the cut-off voltage. The discharge cut-off voltage was set to be 2.0 V against the Li counter electrode as a reference. This charge-discharge cycle was repeated for 10 times. The discharged capacity in the tenth cycle was 150 mAh/g.

### EXAMPLE 31

Electrodes and a half-cell were prepared in the same manner as in Example 30 except that the crystal particles obtained in Example 21 were used as the active material. Charge-discharge characteristic of the obtained half-cell was evaluated in the same manner as in Example 30, provided that the current density was set to be 17 mA/g. The discharged capacity in the tenth cycle was 130 mAh/g.

### EXAMPLE 32

The crystal particles obtained in Example 11 as an active material and a polyvinylidene fluoride as a binder were weighed so that the ratio would be 95:5 by mass, and they were mixed in N-methylpyrrolidone as a solvent to obtain a slurry. In this Example, acetylene black as a conductive material was not added. Electrodes and a half-cell were prepared in the same manner as in Example 30 except that such a slurry was used. Charge-discharge characteristic of the obtained half-cell was evaluated in the same manner as in Example 30. The discharged capacity in the tenth cycle was 152 mAh/g.

### COMPARATIVE EXAMPLE 2

Lithium carbonate (Li₂CO₃), triiron tetraoxide (Fe₃O₄) and ammonium dihydrogen phosphate (NH₄H₂PO₄) were separately weighed so that the composition of the molten material to be obtained would be, based on oxides (unit: mol%) of Li₂O, FeO and P₂O₅, 24.8%, 49.6% and 49.6% (the same composition as in Example 4), and were dry-mixed and pulverized to prepare a starting material mixture. By using such obtained starting material mixture, the melting, cooling and pulverizing steps were carried out in the same manner as in Example 1, and further, coarse particles were removed through a sieve having a mesh size of 106 µm. Electrodes and a half-cell were prepared in the same manner as in Example 30 by using such obtained pulverized material without being subjected to the heating step which was carried out in Example 4, as a positive electrode material. The charge-discharge characteristic of the obtained half-cell was evaluated in the same manner as in Example 30. The discharged capacity in the tenth cycle was 59 mAh/g. Since the heating step was not carried out, the characteristic was insufficient.

### COMPARATIVE EXAMPLE 3

The pulverized material prepared in Comparative Example 2 was subjected to the heating step without being mixed with an organic compound or a carbon powder which functions as a conductive material. Electrodes and a half-cell were prepared in the same manner as in Example 30 by using such obtained crystallized material as a positive electrode material. The charge-discharge characteristic of the obtained half-cell was evaluated in the same manner as in Example 30. The discharged capacity in the tenth cycle was 97 mAh/g. Since an organic compound or a carbon powder which functions as a conductive material was not mixed, the characteristic was insufficient.

### INDUSTRIAL APPLICABILITY

The production process of the present invention may be applied for production of olivine-type phosphate compound particles used as a positive electrode material for a secondary cell.

The entire disclosure of Japanese Patent Application No. 2009-152181 filed on June 26, 2009 including specification, claims, drawings and summary is incorporated herein by reference in its entirety.

### REFERENCE SYMBOLS

1: crystal particle, 2: carbonized material of organic compound, 3: carbon powder.

## Claims

1. A process for producing a positive electrode material for a secondary cell, which comprises, in this order:
a melting step of obtaining a molten material comprising, based on oxides (unit: mol%), from 5 to 40% of A₂O (wherein A is at least one member selected from the group consisting of Li and Na), from 40 to 70% of MO (wherein M is at least one member selected from the group consisting of Fe, Mn, Co and Ni) and from 15 to 40% of P₂O₅;
a cooling step of cooling the molten material to obtain a solidified material;
a pulverizing step of mixing and pulverizing the solidified material and at least one member selected from the group consisting of an organic compound and a carbon powder to obtain a pulverized material; and
a heating step of heating the pulverized material to precipitate crystal containing olivine-type AMPO₄ as well as to bind at least one member selected from the group consisting of the organic compound, the carbon powder and a reaction product thereof to the surface of the crystal;
provided that at least the melting step and the heating step are carried out under an inert atmosphere or a reduced atmosphere.

2. The process for producing a positive electrode material for a secondary cell according to Claim 1, wherein the cooling step is carried out under an inert atmosphere or a reduced atmosphere.

3. The process for producing a positive electrode material for a secondary cell according to Claim 1 or 2, wherein the cooling rate of the molten material in the cooling step is from 100 to 10¹⁰ °C/s.

4. The process for producing a positive electrode material for a secondary cell according to any one of Claims 1 to 3, wherein the pulverizing step is carried out in a dispersion medium.

5. The process for producing a positive electrode material for a secondary cell according to any one of Claims 1 to 4, wherein at least one member selected from the organic compound and the carbon powder to be mixed in the pulverizing step is mixed in an amount of from 0.1 to 20 mass% as the carbon content in the positive electrode material for a secondary cell.

6. The process for producing a positive electrode material for a secondary cell according to any one of Claims 1 to 5, wherein in the heating step, at least a part of the organic compound is carbonized.

7. The process for producing a positive electrode material for a secondary cell according to any one of Claims 1 to 6, wherein the crystal has a composition represented by the following formula (1):
AₓM_{y}PO_{w} (1)
wherein x and y satisfy 0<x≦1.5 and 0.8≦y≦1.2, and w is a number dependent on the valence of the element M and is a number represented by w=(x+yz+5)/2 (wherein z is the valence of the element M).

8. The process for producing a positive electrode material for a secondary cell according to any one of Claims 1 to 7, wherein the organic compound has a water solubility.

9. The process for producing a positive electrode material for a secondary cell according to any one of Claims 1 to 8, wherein the organic compound has a reducing property.

10. The process for producing a positive electrode material for a secondary cell according to any one of Claims 1 to 9, wherein a reducing agent is added in the melting step.

11. The process for producing a positive electrode material for a secondary cell according to any one of Claims 1 to 10, wherein the element A is Li.

12. The process for producing a positive electrode material for a secondary cell according to any one of Claims 1 to 11, wherein the element M is at least one member selected from the group consisting of Fe and Mn.

13. The process for producing a positive electrode material for a secondary cell according to any one of Claims 1 to 12, wherein the crystal has a composition represented by the following formula (2):
LiₓM_{y}PO_{w} (2)
wherein x and y satisfy 0.95≦x≦1.05 and 0.95≦y≦1.05, and w is a number dependent on the valence of the element M and is a number represented by w=(x+yz+5)/2 (wherein z is the valence of the element M).

14. The process for producing a positive electrode material for a secondary cell according to any one of Claims 1 to 13, wherein in the melting step, a starting mixture comprising a compound containing the element A, a compound containing the element M and a compound containing P is heated to obtain the molten material.

15. The process for producing a positive electrode material for a secondary cell according to Claim 14, wherein as the compound containing the element M in the melting step, an oxide of the element M is used (provided that a part or all of the at least one member may form a hydrated salt).

16. The process for producing a positive electrode material for a secondary cell according to Claim 14 or 15, wherein as the compound containing P in the melting step, at least one member selected from the group consisting of phosphorus oxide (P₂O₅), ammonium phosphate ((NH₄)₃PO₄), ammonium hydrogen phosphate ((NH₄)₂HPO₄, NH₄H₂PO₄), phosphoric acid (H₃PO₄), phosphorous acid (H₃PO₃), hypophosphorous acid (H₃PO₂) and a phosphate of M is used (provided that a part or all of the at least one member may form a hydrated salt).

17. A positive electrode material for a secondary cell, which is produced by the process for producing a positive electrode material for a secondary cell as defined in any one of Claims 1 to 16.

18. A process for producing a secondary cell, wherein the positive electrode material for a secondary cell as defined in Claim 17 is used.
